## Europäisches Patentamt
## European Patent Office
## Office européen des brevets

(1) Publication number: **0 061 725**
**B1**

(12) **EUROPEAN PATENT SPECIFICATION**

(45) Date of publication of patent specification: **09.10.85**

(51) Int. Cl.⁴: **H 01 M 2/12, H 01 M 6/14**

(21) Application number: **82102484.1**

(22) Date of filing: **25.03.82**

(54) **Hermetically sealed electrochemical cell having a pressure release vent.**

(30) Priority: **27.03.81 US 248215**

(43) Date of publication of application:
**06.10.82 Bulletin 82/40**

(45) Publication of the grant of the patent:
**09.10.85 Bulletin 85/41**

(84) Designated Contracting States:
**CH DE FR GB LI**

(56) References cited:
**GB-A-2 005 908**
**US-A-4 127 702**
**US-A-4 175 166**
**US-A-4 184 010**

(73) Proprietor: **UNION CARBIDE CORPORATION**
**Old Ridgebury Road**
**Danbury Connecticut 06817 (US)**

(72) Inventor: **Alberto, Vicente Santo Domingo**
**7139 Lee Drive**
**Parma Ohio 44134 (US)**

(74) Representative: **Dipl.-Ing. H.G. Görtz, Dr.-Ing.**
**J.H. Fuchs Patentanwälte**
**Sonnenberger Strasse 100 Postfach 26 26**
**D-6200 Wiesbaden (DE)**

Courier Press, Leamington Spa, England.

## Description

### Field of the invention

The invention relates to an electrochemical cell in a closed housing comprising a container having an open end closed by a flexible metallic cover, said cover having its peripheral edge sealed to the upper open end of the container and defining an opening in said cover, and a conductive terminal extending through said opening and hermetically sealed to the cover by a layer of glass or ceramic bonded to said cover and said terminal.

### Background of the invention

There are many different types of vents on the market for use in cell systems that can vent internal gas pressure buildup during storage, discharge or operating under abusive conditions such as heavy current drains or charging. Many of the vents are made resealable so that after a predetermined gas buildup, the vents will open allowing the gas to escape whereupon the vents will then automatically close. These types of vents are suitable for many different type cell systems such as carbon-zinc, magnesium-$MnO_2$, alkaline $MnO_2$, and nickel-cadmium.

Other types of cell systems, such as the lithium/oxychloride cell system or the lithium/$MnO_2$ cell system, preferably require a hermetically sealed housing and, therefore, generally cannot utilize many of the resealable seals or vents known in the battery art. Specifically, cell systems employing lithium, high vapor pressure organic solvents and inorganic cathode/solvent materials are required to be hermetically sealed in order to prevent the exposure of the highly reactive and corrosive cell materials to the outside environment and to provide superior shelf life. The disadvantage or danger of utilizing a non-venting hermetic seal is that with the buildup of internal pressure within a cell, the force of the pressure could reach a level that could cause the cell to disassemble. Although seals utilizing plugs that are ejected or melt after a predetermined pressure buildup or temperature level is reached have been employed with some success, they may not provide the quality of seal having the required hermeticity for the cell systems referred to above.

US—A—4,115,629 discloses a cell closure which includes a flexible metal member which has an aperture of predetermined area over which a non-polarized metallic disc of a size larger than the aperture is symmetrically positioned and a glass or ceramic layer is then hermetically bonded to the closure and to the disc. The wall structure of the bond is formed so that a predetermined gas buildup within the cell will cause the wall to rupture thereby venting the gas from the cell. US—A—4,127,702 and GB—A—2 005 908 disclose a self-venting battery wherein an insulating material such as glass or ceramic is provided between and bonded to the terminals for electrically insulating them from one another and wherein the insulator is constructed such that cracking of the insulator occurs at a pressure of approximately 689,5 kPa to vent the pressure in the battery before causing the bond between the insulator and terminals to fail. The second terminal is tubular in shape, the insulator is annular in shape and the casing includes an opening located concentrically around the second terminal, the insulator being positioned concentrically around the second terminal and filling the opening in the casing, the outer circumferential surface of the insulator being bonded to the casing around the said opening and the inner circumferential surface of the insulator being bonded to and around the second terminal.

It is an objet of the present invention to provide a hermetically sealed electrochemical cell with a pressure release vent that is easy to construct.

Another object of the present invention is to provide a glass-to-metal seal for electrochemical cells that has a built-in low pressure release mechanism.

Another object of the present invention is to provide a hermetically sealed electrochemical cell that can safely and dependably vent pressure buildup within the cell in the neighborhood of 2169,83 kPa (300 psig) and lower for lithium oxyhalide systems and 5617,33 kPa (800 psig) and lower for lithium-$MnO_2$ systems.

### Summary of the invention

The invention relates to an electrochemical cell in a closed housing comprising a container having an open end closed by a flexible metallic cover, said cover having its peripheral edge sealed to the upper open end of the container and having a radially inwardly disposed flange extending from the cover substantially parallel to the longitudinal axis of the container and said flange defining an opening in said cover; and a conductive terminal extending through said opening and hermetically sealed to the flange by a layer of glass or ceramic bonded to said flange and said terminal such that a predetermined pressure buildup within the cell will cause the cover to flex sufficiently to fracture the glass or ceramic material or the bond therebetween, thus providing a vent passage from the cell.

The inner flange could be disposed upward, downward or partially upward and downward from the plane surface of the cover. Likewise, the outer peripheral edge of the cover could terminate with a skirt to facilitate sealing to the rim of the container. Again, the peripheral skirt could be disposed upward, downward or partially upward and downward from the plane surface of the cover.

Preferably the metal cover could have a U-shaped cross-section such that the peripheral skirt could be suitably secured to the upper rim of the container by conventional techniques such as laser welding, tungsten-inert gas welding, electron beam welding or the like while the inner disposed flange could be bonded to the protruding center electrode rod using a glass or ceramic material. This glass- or ceramic-to-metal seal along with the flexible cover will provide an admirable low pressure release mechanism for cell systems such as the oxyhalide/lithium cell system. Specifically, the novel hermetic seal of this invention can be used to vent oxyhalide/ lithium cells employing thionyl chloride as the liquid depolarizer at pressures between about 790,83 kPa and 2169,83 kPa preferably about 1480,33 kPa. Preferably, glass should be used as the material hermetically sealing the central electrode rod to the flexible cover.

The glass-to-metal seals with a flexible U-shaped cover in cross-section have a built-in pressure release mechanism. Venting takes place when a rise in internal cell pressure causes the flexible cover to flex sufficiently outward, thereby producing a force strong enough to fracture either the glass member or the bond between the glass and the metal parts (i.e., rod and cover). While the in cross-section U-shaped cover type glass-to-metal seal has the capability of venting, its design, however, has to be tailored to provide the best combination of cell hermeticity (when the cell is on shelf and normal use), and low vent release pressure to preclude cell disassembly when subjected to abuse conditions. Based on actual observations and from numerous tests the ventability of a U-shaped type glass-to-metal seal is dependent on the following interactive factors.

(1) The thickness or strength of the flexible cover is of primary importance. A flat 1,524 mm thick cover type glass-to-metal seal vents at pressures exceeding 5617,33 kPa. Venting takes place when the pressure within the cell exerts enough force to overcome the force of adhesion of the glass to the metal. Because of the rigidity of the solid cover, the outward being of the cover is insignificant, and hence does not influence the venting characteristic of the seal. The in cross-section U-shaped cover type glass-to-metal seal, on the other hand, was conceived to effect venting at lower pressures. This condition is made possible by the flexural force exerted on the glass-to-metal seal as a result of the buckling of the flexible cover. In other words, there are two forces that cause a in cross-section U-shaped cover type glass-to-metal seal to vent, namely, a) a shear force similar to the one that causes venting in a 1,524 mm thick flat cover glass-to-metal seal, and b) a flexural force which occurs due to the bending of the flexible cover.

If the flexing of the cover is the only factor that causes venting in this type of seal, then one would expect that a 0,118 mm cover will vent at a lower pressure than a 0,118 mm cover. This, however, was not observed. The 0,254 mm cover flexed at a much lower pressure relative to the 0,254 mm cover, but its flexural force was evidently lower, hence venting occurred at a higher pressure. The effect of the flexural force on venting was actually observed when dummy cells incorporating the in cross-section U-shaped cover flexed instantaneously with a "whipping" action as soon as the flexing pressure was reached. After flexing, venting took place momentarily. A 0,118 mm cover on the other hand flexed at a slower rate and with lesser "whipping" action relative to the 0,254 mm cover. Hence, the vent pressure/ flexing pressure differential is greater for the 0,118 mm cover.

In designing a U-shaped cover glass-to-metal seal to vent at a certain pressure, the thickness of the cover has to be carefully selected so that the best combination of flexing and flexural force is achieved.

The above discussions were based on U-shaped covers having a 2,845 mm inner diameter and a 1,524 mm inner flange height. The inner flange height usually specifies the glass-to-metal interface area in the cover. The inner diameter of the cover and inner flange height have significant effects on the strength of the glass-to-metal seal.

(2) The inside diameter (I.D.) of the cover is equal to the outside diameter of the glass member. The pressure required to bend a U-shaped cover in cross-section varies with the inner diameter of the cover. That is, the larger the inner diameter of the cover, the greater is the pressure required to bend the cover. This is rather self evident because pressure by definition is force per unit area. Therefore, the larger the exposed area (smaller I.D.), the less pressure it takes to buckle the cover.

(3) The height of the inner flange of the cover defines the glass-to-metal interface area. The strength of a glass-to-metal seal is partly dependent on the glass-to-metal interface area in that the larger the area, the stronger the seal. In view of this known relationship, it is, therefore, possible to tailor the design of the U-shaped cover type glass-to-metal seal so that it will vent at a certain pressure.

(4) The force required to fracture the glass and vent a sealed cell is proportional to the height of the glass ring in the glass-to-metal seal. As expected, taller glass rings provided higher vent pressures than shorter beads for the same size inner flange. It was also noted that the flange height had a greater effect on the vent pressure than did the height of the glass ring. Thus wider flanges and taller glass rings obviously increase the glass-to-metal contact area and hence will result in seals having higher venting pressures.

(5) The welding power and/or time used to join the seal to the container can affect the venting pressure. It has been observed that in welding 12,065 mm size glass-to-metal seals to empty drawn cans, the incidence of seal leakage on a standard dye test increases with increasing weld power. The leakage has been attributed to the thermal shock developed during the welding of the seal to the container, which either fractured the glass or disrupted the bond between the glass and metal. In view of this, it is reasonable to expect that with excessive weld power, there is a greater probability for the seal to vent at lower pressures.

The effect of the weld power on the integrity of the seal is more pronounced in larger inner diameter and thicker covers. Glass-to-metal seals with larger inner diameter covers are more vulnerable to thermal shock than smaller inner diameter covers because of the proximity of the glass to the welding area. Glass-to-metal seal with thicker covers are likewise more vulnerable to thermal shock than those with thinner covers. The heat generated during the welding process reaches the glass member by conduction. Since the quantity of heat flow by conduction varies directly as the lateral cross-sectional area of the conductor (cover), it follows that the thicker the cover the more susceptible the glass-to-metal seal is to thermal shock.

In summary, the ventability of the in cross-section U-shaped cover type glass-to-metal seals can be tailored by careful "tuning" of the factors enumerated and discussed above.

Flexible metallic covers suitable for use in this invention may be made of stainless steel or cold-rolled steel. Suitable glass materials would include borosilicate glasses such as type 203KN obtained from Glass Bead Inc. Suitable ceramic materials for use in this invention would include those containing alumina as a major ingredient. For general applications the diameter of the glass ring should be between about 15% and 50% of the diameter of the cover. For the venting of pressure between 790,83 kPa and 5617,33 kPa the specification of the cover of various cell sizes should be shown as in the Table.

TABLE

| Diameter of Cell | | Thickness | | Cover Inner Diameter | | Inner Flange Height | | Venting Pressure | |
|---|---|---|---|---|---|---|---|---|---|
| (Inch) | mm | (Inch) | mm | (Inch) | mm | (Inch) | mm | (psig) | kPa |
| 0.475 | 12,065 | 0.007 | 0,118 | 0.112 | 2,845 | 0.033 | 0.838 | 170 | 1273,48 |
| 0.374 | 9,525 | 0.007 | 0,118 | 0.112 | 2,845 | 0.033 | 0.838 | 375 | 2686,96 |
| 0.475 | 12,065 | 0.010 | 0,254 | 0.112 | 2,845 | 0.060 | 1,524 | 350 | 2514,57 |
| 0.475 | 12,065 | 0.015 | 0,381 | 0.112 | 2,845 | 0.060 | 1,524 | >800 | 5617,33 |
| 0.475 | 12,065 | 0.007 | 0,118 | 0.112 | 2,845 | 0.060 | 1,524 | >800 | 5617,33 |

The present invention will become apparent from the following description thereof when considered together with the accompanying drawings which are set forth as being exemplary of embodiments of the present invention and are not intended, in any way, to be limitative thereof and wherein:

Figure 1 is a sectional elevation taken through a cover seal assembly for use in this invention.

Figure 2 is a partial isometric view of another embodiment of a cover seal assembly for use in this invention.

Figure 3 is a sectional elevation taken through a fully assembled electrochemical cell employing a hermetic seal in accordance with this invention.

Figure 4 is an enlarged horizontal cross-sectional view taken along line 4—4 of Figure 3.

Figure 5 is a plot of vent pressure vs. inner flange height for various cells having covers hermetically sealed to containers.

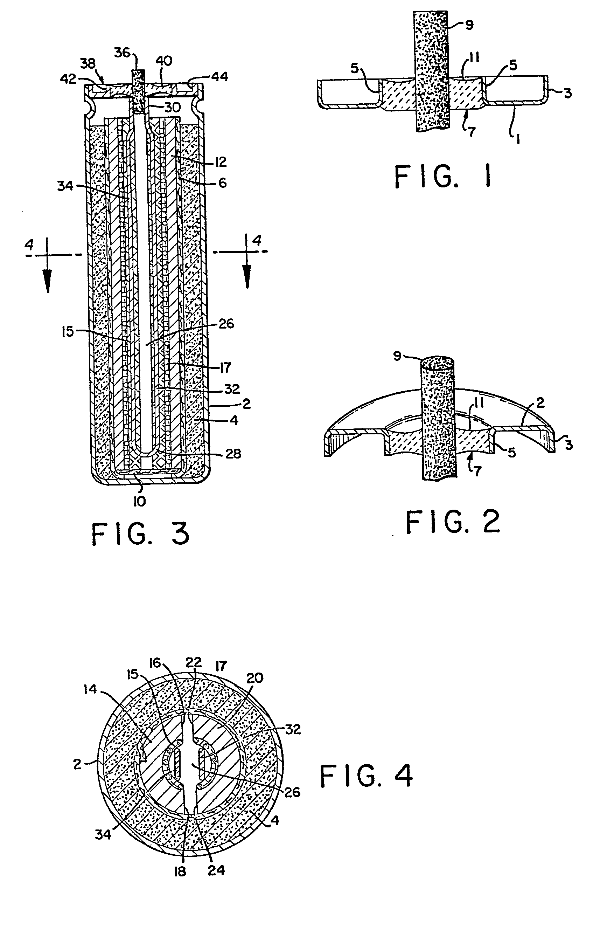

Referring in detail to Figure 1, there is shown a in cross-section U-shaped cover 1 having an upwardly disposed peripheral skirt 3 and an inner upwardly disposed flange 5. The inner disposed flange 5 defines an opening 7 through which a centrally disposed electrode terminal 9 protrudes and is sealed to said flange 5 using a layer 11 of glass or ceramic bonded to both flange 5 and terminal 9. Skirt 3 is suitably adapted for being secured to the upper rim of a conventional cell can or container.

Figure 2 shows a similar type in cross-section U-shaped cover-seal assembly as in Figure 1 except that the cover is inverted. The remaining components are identical and therefore have been identified with the same reference numbers. The preferable embodiment is the cover-seal assembly shown in Figure 1 because this type cover is easier to weld to the container than is an upright cover of Figure 2. Additionally, it has been found that venting is facilitated with this type of inverted cover-seal assembly as shown in Figure 1.

Referring in detail to Figure 3, there is shown a cross-sectional view of a cylindrical cell comprising a cylindrical container 2 having disposed therein a cathode collector shell 4 in contact with the inner upstanding circumference of the container 2 thereby adapting the container as the cathodic or positive terminal for the cell. Disposed within and in contact with the inner circumference of cathode collector 4 is a separator liner 6 with its bottom separator or disc 10. If desired, the cathode collector material could be extruded within the container 2, rolled with the can material or composed of one or more segments to form a cylindrical tube and then placed in the can.

A two member anode 12 is shown in Figures 3 and 4 comprising a first half cylindrical annular member 14 having flat end faces 16 and 18 and a second half cylindrical annular member 20 having flat end faces 22 and 24. When the flat end faces of each half cylindrical member are arranged in an opposing fashion as shown in Figures 3 and 4, an axial opening 26 is defined between the half cylindrical annular members 14 and 20.

If desired, arcuate type backing sheets 15 and 17, such as inert electrically conductive metal screens or grids, could be disposed against the inner surface wall of the anode bodies 14 and 20, respectively, to provide uniform current distribution over the anode. This will result in a substantially uniform consumption or utilization of the anode while also providing a substantially uniform spring pressure over the inner wall surface of the anode as will be discussed below.

An electrically conductive spring strip 28 is appropriately bent into a flattened elliptically shaped member having extending ends 30. When inserting the spring strip 28 into a container, the legs 32, 34 of the conductive strip 28 are squeezed together and forced into the axial opening between the two screen backed anode members arranged in a container as shown in Figures 3 and 4. The inserted conductive spring strip 28 resilient biases the two anode members 14 and 20 via backing screens 15 and 17 so as to provide a substantially uniform and continuous pressure contact over the inner wall of the anode members. The extended ends 30 of spring strip 28 are shown projected above the surface of anode members 14 and 20 and containing a cylindrical terminal 36. Terminal 36 is shown protruding through flexible cover 38 and hermetically sealed to cover 38 using a layer of glass 40 bonded to said terminal 36 and the flange 42 of cover 38 as basically shown in Figure 1. The skirt 44 of cover 38 is welded to container 2 thereby adapting the container as a terminal of the cell while terminal 36 is adapted as the other terminal of the cell. Before closing the cell with the cover, the cathode-electrolyte comprising a suitable salt dissolved in an oxyhalide, a halide with a cosolvent, or mixtures thereof can be dispensed into the cell whereupon it can permeate through the anode, separator and cathode collector.

In the above described cell, the anode and cathode collector could be interchanged where possible, such that the anode would be disposed adjacent the inner wall of the cell's container and the cathode collector would be disposed within the anode and separated therefrom by a suitable separator as described above.

The following examples are illustrative of the present invention and are not intended in any manner to be limitative thereof.

Example I

Two 12,065 mm (0.475 inch) diameter containers were hermetically sealed using a cover-seal assembly as shown in Figure 1. The thickness of the cover for one cell was 0,118 mm (0.007 inch) and that for the second cell was 0,254 mm (0.010 inch), and both covers had a flange height of 1,524 mm (0.060 inch). The 0,118 mm (0.007 inch) cover had a flexing pressure (force at which distortion of the cover begins to occur) of 1273,48 kPa (170 psig) while the 0,254 mm (0.010 inch) cover had a flexing pressure of 2514,57 kPa (350 psig). Both cells were pressurized and it was observed that the 0,254 mm (0.010 inch) cover-seal assembly vented at 3548,83 kPa (500 psig) while the 0,118 mm (0.007 inch) cover-seal assembly vented at 4238,33 kPa (600 psig). Consequently, since the 0,118 mm (0.007 inch) cover flexed at a lower pressure relative to the 0,254 mm (0.010 inch) cover, then the flexural force of the former was evidently lower thereby causing venting to occur at a higher pressure.

Example II

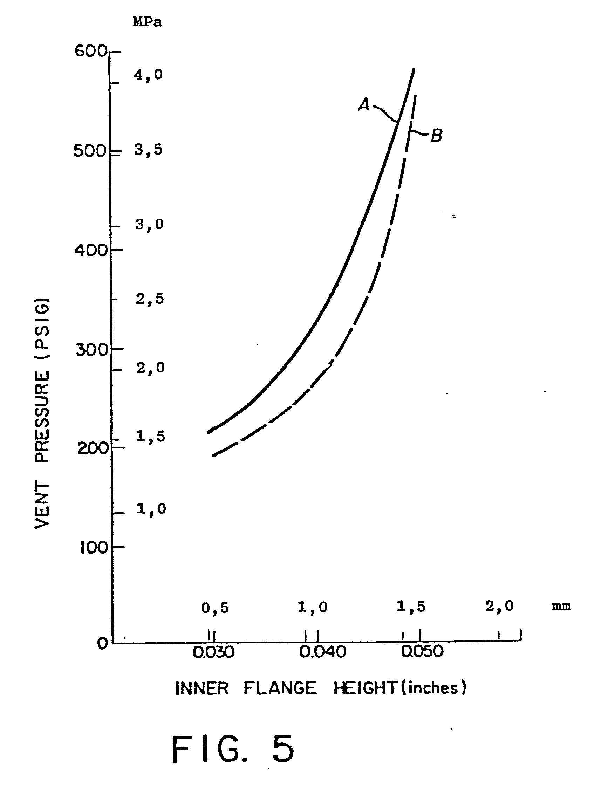

Three glass-to-metal seal assemblies were produced using 11,43 mm (0.450 inch) diameter covers having an inner flange height of either 0,762 mm (0.030 inch), 1,016 mm (0.040 inch) or 1,27 mm (0.050 inch). A central terminal was bonded to the flange using a layer of a glass material measuring 1,905 mm (0.075 inch) high (glass ring). The cells were pressurized to determine the vent pressure and the results obtained are shown in Figure 5 as curve A. Three additional cells were constructed in a similar manner except that the layer of glass bonded to the central terminal and the flange was 1,524 mm (0.060 inch) high. Again the cells were pressurized to determine the vent pressure and the results obtained are shown in Figure 5 as curve B. These data show lower venting pressures were obtained with shorter glass beads and lower flange heights.

**Claims**

1. An electrochemical cell in a closed housing comprising a container (2) having an open end closed by a flexible metallic cover (1), said cover having its peripheral edge sealed to the upper open end of the container, there being an opening (7) in said cover (1), and a conductive terminal (9, 36) extending through said opening (7) and hermetically sealed to the cover (1) by a layer (11) of glass or ceramic bonded to said cover (1) and said terminal (9, 36); characterized in that said cover (1) has a radially inwardly disposed flange (5) extending from said cover substantially parallel to the longitudinal axis of the container, said flange (5) defining said opening (7) in said cover (1); and said layer (11) being sealed such that a predetermined pressure buildup within the cell will cause the cover to flex sufficiently to fracture the glass or ceramic material or bond thereby providing a vent passage from the cell.

2. The electrochemical cell of Claim 1, characterized in that the flange (5) extends upward from the plane surface of its cover (1).

3. The electrochemical cell of Claim 1, characterized in that the flange (5) extends downward from the plane surface of the cover (1).

4. The electrochemical cell of Claim 1, 2 or 3, characterized in that the cover has a peripheral extending skirt (3) sealed to the upper open end of the container.

5. The electrochemical cell of Claim 2 and 4, characterized in that the flange (5) and the peripheral skirt (3) extend upward from the plane surface of the cover (1) to form a U-shaped cross-section.

6. The electrochemical cell of Claim 3 and 4, characterized in that the flange and the peripheral skirt (3) extend downward from the plane surface of the cover to form an inverted U-shaped cross-section.

7. The electrochemical cell of Claim 1, 2, 3, 4, 5 or 6, characterized in having about a 12,065 mm diameter container (2) and a cover (1) having a radially inwardly disposed flange (5) of about 0,838 mm in length and a thickness of about 0,118 mm.

8. The electrochemical cell of Claim 1, 2, 3, 4, 5 or 6, characterized in having a 9,525 mm diameter container and a cover having a radially inwardly disposed flange of about 0,838 mm in length and a thickness of about 0,117 mm.

9. The electrochemical cell of Claim 1, 2, 3, 4, 5, 6, 7 or 8, characterized in that a pressure buildup between about 790,83 kPa and 5617,33 kPa will cause the cover (1) to flex sufficiently to fracture the glass or ceramic material or the bond thereby providing a vent passage from the cell.

10. The electrochemical cell of Claim 1, 2, 3, 4, 5, 6, 7 or 8, characterized in that the conductive terminal (9, 36) is hermetically sealed to the flange (5) of the cover (1) by a layer (11) of glass bonded to said flange and said terminal.

11. The electrochemical cell of Claim 10, characterized in that a pressure buildup between about 790,83 kPa and 2169,83 kPa will cause the cover (1) to flex sufficiently to fracture the glass material or the bond between the terminal (11) and glass or flange (5) and glass thereby providing a vent passage from the cell.

12. The electrochemical cell of Claim 1, 2, 3, 4, 5, 6, 7, 8, 10 or 11, characterized in employing a lithium anode and an oxyhalide cathode.

13. The electrochemical cell of Claim 12, characterized in that the oxyhalide is thionyl chloride.

14. The electrochemical cell of Claim 1, 2, 3, 4, 5, 6, 7, 8 or 9, characterized in employing a lithium anode and a $MnO_2$ cathode.

**Patentansprüche**

1. Elektrochemische Zelle in einem geschlossenen Gehäuse mit einem Behälter (2), der ein offenes Ende aufweist, das durch einen elastischen Metalldeckel (1) verschlossen ist, dessen Umfangskante gegen das obere offene Ende des Behälters abgedichtet ist und der eine Öffnung (7) enthält, und mit einem leitenden Anschluß (9, 36), der sich durch diese Öffnung (7) hindurch erstreckt und mittels einer Schicht (11) aus Glas oder Keramik gegen den Deckel (1) abgedichtet ist, die fest mit dem Deckel (1) und dem Anschluß (9, 36) verbunden ist, dadurch gekennzeichnet, daß der Deckel (1) einen in radialer Richtung innen gelegenen Flansch (5) aufweist, der sich von dem Deckel aus weitgehend parallel zu der Längsachse des Behälters erstreckt und die Öffnung (7) in dem Deckel (1) begrenzt; und daß die genannte Schicht (11) derart abgedichtet ist, daß ein vorbestimmter Druckanstieg innerhalb der Zelle bewirkt, daß sich der Deckel genügend biegt, so daß das Glas- oder Keramikmaterial springt und dadurch ein Entgasungsweg aus der Zelle entsteht.

2. Elektrochemische Zelle nach Anspruch 1, dadurch gekennzeichnet, daß der Flansch (5) sich von der ebenen Oberfläche des Deckels (1) nach oben erstreckt.

3. Elektrochemisch Zelle nach Anspruch 1, dadurch gekennzeichnet, daß sich der Flansch (5) von der ebenen Fläche des Deckels (1) nach unten erstreckt.

4. Elektrochemische Zelle nach Anspruch 1, 2 oder 3, dadurch gekennzeichnet, daß der Deckel einen sich erstrekenden Umfangskragen (3) aufweist, der gegen der obere offene Ende des Behälters abgedichtet ist.

5. Elektrochemische Zelle nach Anspruch 2 und 4, dadurch gekennzeichnet, daß der Flansch (5) und der Umfangskragen (3) sich von der ebenen Fläche des Deckels (1) nach oben erstrecken und einen U-förmigen Querschnitt bilde.

6. Elektrochemische Zelle nach Anspruch 3 und 4, dadurch gekennzeichnet, daß der Flansch und der Umfangskragen (3) sich von der ebenen Fläche des Deckels nach unten erstrecken und einen Querschnitt in Form eines umgekehrten U bilden.

7. Elektrochemische Zelle nach Anspruch 1, 2, 3, 4, 5, oder 6, dadurch gekennzeichnet, daß sie einen Behälter (2) mit einem Durchmesser von ungefähr 12,065 mm und einen Deckel (1) mit einem in radialer Richtung innen gelegenen Flansch (5) von ungefähr 0,838 mm Länge und ungefähr 0,118 mm Dicke aufweist.

8. Elektrochemische Zelle nach Anspruch 1, 2, 3, 4, 5 oder 6, dadurch gekennzeichnet, daß sie einen Behälter mit einem Durchmesser von 9,525 mm und einen Deckel mit einem in radialer Richtung innen gelegenen Flansch von ungefähr 0,838 mm Länge und ungefähr 0,117 mm Dicke aufweist.

9. Elektrochemische Zelle nach Anspruch 1, 2, 3, 4, 5, 6, 7 oder 8, dadurch gekennzeichnet, daß ein Druckaufbau zwischen ungefähr 790,83 kPa und 5617,33 kPa bewirkt, daß sich der Deckel (1) genügend biegt, so daß das Glas- oder Keramikmaterial springt und dadurch ein Entgasungsweg aus der Zelle entsteht.

10. Elektrochemisch Zelle nach Anspruch 1, 2, 3, 4, 5, 6, 7 oder 8, dadurch gekennzeichnet, daß der leitende Anschluß (9, 36) gegen den Flansch (5) des Deckels (1) hermetisch mittels einer Schicht (11) aus Glas abgedichtet ist, die mit dem Flansch und dem Anschluß verbunden ist.

11. Elektrochemische Zelle nach Anspruch 10, dadurch gekennzeichnet, daß ein Druckaufbau zwischen ungefähr 790,83 kPa und 2169,83 kPa bewirkt, daß sich der Deckel (1) genügend biegt, so daß das Glasmaterial oder die Bindung zwischen dem Anscluß (11) und dem Glas oder dem Flansch (5) und dem Glas springt und dadurch ein Entgasungsweg aus der Zelle entsteht.

12. Elektrochemische Zelle nach Anspruch 1, 2, 3, 4, 5, 6, 7, 8, 10 oder 11, dadurch gekennzeichnet, daß eine Lithiumanode und eine Oxyhalogenidkathode verwendet wird.

13. Eletrochemische Zelle nach Anspruch 12, dadurch gekennzeichnet, daß das Oxyhalogenid Thionylchlorid ist.

14. Elektrochemische Zelle nach Anspruch 1, 2, 3, 4, 5, 6, 7, 8 oder 9, dadurch gekennzeichnet, daß eine Lithiumanode und eine MnO$_2$-Kathode verwendet wird.

**Revendications**

1. Une pile électrochimique contenue dans un boîtier fermé, comprenant un conteneur (2) ayant une extrémité ouverte qui est fermée par un capot métallique flexible (1), avec le bord périphérique de ce capot scellé à l'extrémité supérieure ouverte du conteneur, ce capot (1) comportant une ouverture (7), et une borne conductrice (9, 36) traversant l'ouverture (7) et scellée hermétiquement au capot (1) par une couche (11) der verre ou de céramique adhérant au capot (1) et à la borne (9, 36); caractérisée en ce que le capot (1) comporte un rebord (5) disposé vers l'intérieure en direction radiale, qui s'étend à partir du capot dans une direction pratiquement parallèle à l'axe longitudinal du conteneur, ce rebord (5) définissant l'ouverture (7) dans le capot (1); et en ce que la couche (11) établit une fermeture hermétique dans des conditions telles qu'une accumulation de pression prédéterminée à l'intérieur de la pile provoque une flexion du capot suffisante pour fracturer le verre ou la céramique ou la liaison avec le capot, en établissant ainsi un passage d'évent pour la pile.

2. La pile électrochimique de la revendication 1, caractérisée en ce que le rebord (5) s'élève à partir de la surface plane de son capot (1).

3. La pile électrochimique de la revendication 1, caractérisée en ce que le rebord (5) s'étend vers le bas à partir de la surface plane du capot (1).

4. La pile électrochimique de la revendication 1, 2 ou 3, caractérisée en ce que le capot comporte une jupe périphérique (3) qui est liée hermétiquement à l'extrémité supérieure ouverte du conteneur.

5. La pile électrochimique des revendications 2 et 4, caractérisée en ce que le rebord (5) et la jupe périphérique (3) s'élèvent à partir de la surface plane du capot (1) pour former une section transversale en forme de U.

6. La pile électrochimique des revendications 3 et 4, caractérisée en ce que le rebord et la jupe périphérique (3) s'étendent vers le bas à partir de la surface plane du capot pour former une section transversale en forme de U renversé.

7. La pile électrochimique de la revendication 1, 2, 3, 4, 5 ou 6, caractérisée en ce qu'elle comporte un conteneur (2) d'environ 12,065 mm de diamètre et un capot (1) ayant un rebord (5) disposé vers l'intérieur en direction radiale, d'environ 0,838 mm de longueur et d'une épaisseur d'environ 0,118 mm.

8. La pile électrochimique de la revendication 1, 2, 3, 4, 5 ou 6, caractérisée en ce qu'elle comporte un conteneur de 9,525 mm de diamètre et un capot ayant un rebord disposé vers l'intérieure en direction radiale d'environ 0,838 mm de longueuer et d'une épaisseur d'environ 0,117 mm.

9. La pile électrochimique de la revendication 1, 2, 3, 4, 5, 6, 7 ou 8, caractérisée en ce qu'une accumulation de pression comprise entre environ 790,83 kPa et 5617,33 kPa provoque une flexion du capot (1) suffisante pour fracturer le verre ou la céramique ou la liaison avec le capot, ce qui établit un passage d'évent pour la pile.

10. La pile électrochimique de la revendication 1, 2, 3, 4, 5, 6, 7 ou 8, caractérisée en ce que la borne conductrice (9, 36) est scellée hermétiquement au rebord (5) du capot (1) par une couche (11) de verre qui adhère à ce rebord et à la borne.

11. La pile électrochimique de la revendication 10, caractérisée en ce qu'une accumulation de pression comprise entre environ 790,83 kPa et 2169,83 kPa provoque une flexion du capot (1) suffisante pour fracturer le verre ou la liaison entre la borne (11) et le verre ou entre le rebord (5) et le verre, ce qui établit un passage d'évent pour la pile.

12. La pile électrochimique de la revendication 1, 2, 3, 4, 5, 6, 7, 8, 10 ou 11, caractérisée en ce qu'elle utilise une anode en lithium et une cathode en oxyhalogénure.

13. La pile électrochimique de la revendication 12, caractérisée en ce que l'oxyhalogénure est du chlorure de thionyle.

14. La pile électrochimique de la revendication 1, 2, 3, 4, 5, 6, 7, 8 ou 9, caractérisée en ce qu'elle utilise une anode en lithium et une cathode en MnO$_2$.

FIG. 1

FIG. 3

FIG. 2

FIG. 4

1

FIG. 5

FIG. 5